## Europäisches Patentamt

## European Patent Office

## Office européen des brevets

(11) Veröffentlichungsnummer : **0 059 242**
**B1**

(12) EUROPÄISCHE PATENTSCHRIFT

(45) Veröffentlichungstag der Patentschrift :
26.06.85

(51) Int. Cl.⁴ : **H 04 Q 11/04**

(21) Anmeldenummer : 81108513.3

(22) Anmeldetag : 19.10.81

(54) Schaltungsanordnung für Zeitmultiplex-Fernmeldevermittlungsanlagen, insbesondere PCM-Fernsprechvermittlungsanlagen, mit Datenwegen zwischen einem zentralen Steuerwerk und dezentralen Steuereinrichtungen.

(30) Priorität : 24.02.81 DE 3106879

(43) Veröffentlichungstag der Anmeldung :
08.09.82 Patentblatt 82/36

(45) Bekanntmachung des Hinweises auf die Patenterteilung : 26.06.85 Patentblatt 85/26

(84) Benannte Vertragsstaaten :
AT CH FR GB IT LI NL SE

(56) Entgegenhaltungen :
EP-A- 0 015 524
TELCOM REPORT, Band 2, Nr. 2, Juni 1979 MÜN-
CHEN (DE) H. SUCKFÜLL: "Architektur einer neuen
Linie digitaler öffentlicher Fernsprechvermittlungen"
Seiten 174-183

(73) Patentinhaber : Siemens Aktiengesellschaft
Berlin und München Wittelsbacherplatz 2
D-8000 München 2 (DE)

(72) Erfinder : Troost, Marcel Abraham, Dipl.-Ing
Gabriele-Münter-Strasse 25
D-8000 München 71 (DE)
Erfinder : Neufang, Karlheinz
Nebelhornstrasse 77a
D-8000 München 21 (DE)

## Beschreibung

Die deutsche Offenlegungsschrift 2 826 113 zeigt und beschreibt eine Schaltungsanordnung für zentralgesteuerte Zeitmultiplex-Fernmeldevermittlungsanlagen, insbesondere PCM-Fernsprechvermittlungsanlagen, mit einem mehrstufigen Koppelfeld mit Zeitmultiplex-Koppelfeldanschlüssen, mit welchen jeweils eine dem Anschluß von Zeitmultiplex-Verbindungsleitungen, Analog-Verbindungsleitungen und/oder Analog-Teilnehmerleitungen dienende Anschlußeinrichtung verbunden ist, und mit wenigstens einem zentralen Steuerwerk und mehreren, den Anschlußeinrichtungen individuell zugeordneten dezentralen Steuereinrichtungen, die mit dem Steuerwerk über Datenkanäle in Verbindung stehen, die über das Koppelfeld durchgeschaltet werden und ständig in übertragungsbereitem Betriebszustand erhalten werden.

Ferner ist in der genannten Offenlegungsschrift beschrieben, daß zur Herstellung von Verbindungswegen über das Koppelfeld ein zentrales Steuerwerk und zu verschiedenen Anlageteilen gehörende Einrichtungen mitwirken. Einer Kopplersteuerung werden Einstellbefehle geliefert. Zu den genannten Verbindungswegen gehören auch die Datenkanäle, die zwischen dem zentralen Steuerwerk und den dezentralen Steuereinrichtungen ständig in übertragungsbereitem Betriebszustand erhalten werden. Für den Datenaustausch zwischen Steuerwerk und Steuereinrichtungen ist also kein gesondertes Übertragungsnetzwerk erforderlich, sondern hierzu werden von den durch das Koppelfeld bereitgestellten Übertragungswegen einige verwendet. Anstelle eines gesonderten Übertragungsnetzwerkes wird also das ohnehin vorhandene und zu genanntem Zweck entsprechend geringfügig stärker ausgelegte (hinsichtlich Verkehrsleistung) Koppelfeld mit ausgenutzt.

Das Erfordernis, die genannten durchgeschalteten Datenwege ständig im übertragungsbereiten Betriebszustand zu erhalten, stellt während des laufenden Betriebes kein Problem dar. Hierzu werden die ohnehin vorhandenen Haltespeicher der Zeitlagenvielfache und Raumlagenvielfache mitausgenutzt. Zum Aufbau und zur Aufrechterhaltung von Fernmeldeverbindungen, z. B. Fernsprechverbindungen, erarbeitet und liefert das zentrale Steuerwerk die zur Verbindungsherstellung erforderlichen Wegedaten. Diese werden bei Herstellung von Fernmeldeverbindungen zu den Haltespeichern übertragen und in ihnen gespeichert. Jede Betriebsunterbrechung aber, bei der auch nur ein Teil des Inhaltes der Haltespeicher verlorengeht, würde im bekannten Falle in der Regel einen Neuaufbau der Gesamtheit der erforderlichen Datenverbindungen über das Koppelfeld nach sich ziehen, weil nach Eintritt einer entsprechenden Betriebsunterbrechung sich nicht ohne weiteres, d. h. nicht ohne einen besonderen Aufwand an Betriebsabläufen, feststellen lassen wird, welche Datenwege noch bestehen und welche nicht mehr. In einem solchen Fall ist es deshalb in der Regel erforderlich, die Gesamtheit der Datenverbindungen zwischen dem zentralen Steuerwerk und den dezentralen Steuereinrichtungen neu aufzubauen.

Die Erfindung bezieht sich auf eine Schaltungsanordnung der eingangs angegebenen Art mit einer dem Koppelfeld zugeordneten und von dem ebenfalls mit wenigstens einem Koppelfeldanschluß verbundenen Steuerwerk Koppelfeldeinstelldaten empfangenden und aufgrund derselben Nachrichtenverbindungen über Koppelfeld durchschaltenden Koppelfeldeinstelleinrichtung, die Koppelfeldeinstelldaten zur Durchschaltung von Datenkanälen gespeichert enthält und eine Durchschaltung solcher Datenkanäle anhand der gespeicherten Koppelfeldeinstelldaten durchführt.

Eine Schaltungsanordnung dieser Art ist bereits durch die europäische Patentanmeldung 0 015 524 bekannt. Darin ist eine Fernmeldevermittlungsanlage beschrieben, bei der eine Verbindung zwischen einer Koppelfeldeinstelleinrichtung und einem Zentralsteuerwerk über ein dazugehöriges Koppelfeld verläuft. In diesem Fall kann es eine Verbindung zwischen Koppelfeldeinstelleinrichtung und Zentralsteuerwerk grundsätzlich nur über das Koppelfeld geben. Eine vom Koppelfeld unabhängige Verbindung zwischen Koppelfeldeinstelleinrichtung und Zentralsteuerwerk ist also in diesem bekannten Falle überhaupt nicht vorgesehen. Deshalb ergibt sich hier eine Speicherung von Einstelldaten für diese Verbindungen in der Koppelfeldeinstelleinrichtung ganz zwangsläufig als Notwendigkeit. Denn in diesem bekannten Falle muß immer eine Verbindung der Koppelfeldeinstelleinrichtung mit dem Zentralsteuerwerk über das Koppelfeld hergestellt werden, bevor die Koppelfeldeinstelleinrichtung Einstelldaten für Koppelfeldeinstellvorgänge vom Zentralsteuerwerk überhaupt empfangen kann. Eine Speicherung von Koppelfeldeinstelldaten in der Koppelfeldeinstelleinrichtung für die Verbindung zwischen Koppelfeldeinstelleinrichtung und Zentralsteuerwerk ergibt sich hier als zwingende Notwendigkeit, weil keine anderen koppelfeldunabhängigen Wege zwischen Koppelfeldeinstelleinrichtung und Zentralsteuerwerk existieren. Die Erfindung dagegen berührt nicht die Frage der Bereitstellung dieser Wege, denn sie geht bereits von dem Vorhandensein eines vom Koppelfeld unabhängigen Datenweges zwischen Zentralsteuerwerk und Koppelfeldeinstelleinrichtung aus ; sie richtet sich vielmehr auf das Problem der Zentralsteuerwerksbelastung im Einschaltefall oder Wiedereinschaltefall nach einer Betriebsunterbrechung.

Für die Erfindung besteht die Aufgabe, im Hinblick auf die Bereitstellung der Datenwege zwischen zentralem Steuerwerk und dezentralen Steuereinrichtungen die Betriebsabwicklung möglichst einfach zu gestalten. Dies soll sowohl zur Entlastung des zentralen Steuerwerkes dienen als auch zur Entlastung von Einrichtungen, mit deren Hilfe die Übertragung von Daten von ihm in die Peripherie bewerkstelligt wird.

Diese Aufgabe wird durch die Erfindung dadurch gelöst, daß Koppelfeldeinstelldaten für sämtliche über das Koppelfeld durchzuschaltende Datenkanäle zwischen dem zentralen Steuerwerk und der Gesamtheit der Anschlußeinrichtungen in der Koppelfeldeinstelleinrichtung gespeichert sind, und daß der Befehl zur Durchschaltung dieser Datenkanäle vom zentralen Steuerwerk über einen vom Koppelfeld unabhängig bestehenden Datenweg an die Koppelfeldeinstelleinrichtung abgegeben wird.

Die Erfindung schafft den Vorteil, daß das Zentralsteuerwerk insbesondere nach Eintritt einer Betriebsunterbrechung, zum Beispiel aufgrund einer Betriebsstörung, von der Erarbeitung und Lieferung (Verteilung an die Peripherie) der Koppelfeldeinstelldaten zur Herstellung der Datenübertragungswege zwischen zentralem Steuerwerk und dezentralen Steuereinrichtungen entlastet wird. Diese Entlastung kommt also gerade in einer solchen Betriebssituation positiv zur Wirkung, wenn — nach Beendigung einer Betriebsunterbrechung, zum Beispiel nach Beseitigung einer Betriebsstörung — das zentrale Steuerwerk ohnehin mit Aufträgen zur Herstellung von Fernmeldeverbindungen überhäuft wird und ein besonders hoher Datenfluß vom zentralen Steuerwerk zu in der Peripherie vorgesehenen Einrichtungen zu erwarten ist, denen diese Daten zuzuführen sind.

Die Erfindung bewirkt also, das Zentralsteuerwerk im Einschaltefall oder Wiedereinschaltefall wirksam zu entlasten. Eine dahingehende Aufgabenstellung ist der zuletzt angesprochenen bekannten Anordnung hingegen nicht zu entnehmen. Die Erfindung erzielt diese wirksame entlastung des Zentralsteuerwerks dadurch. daß für die Vielzahl von einzeln über das Koppelfeld herzustellenden Datenwegen zwischen Zentralsteuerwerk und sämtlichen peripheren Anschlußeinrichtungen LTG... alle Koppelfeldeinstelldaten in der Koppelfeldeinstelleinrichtung gespeichert sind.

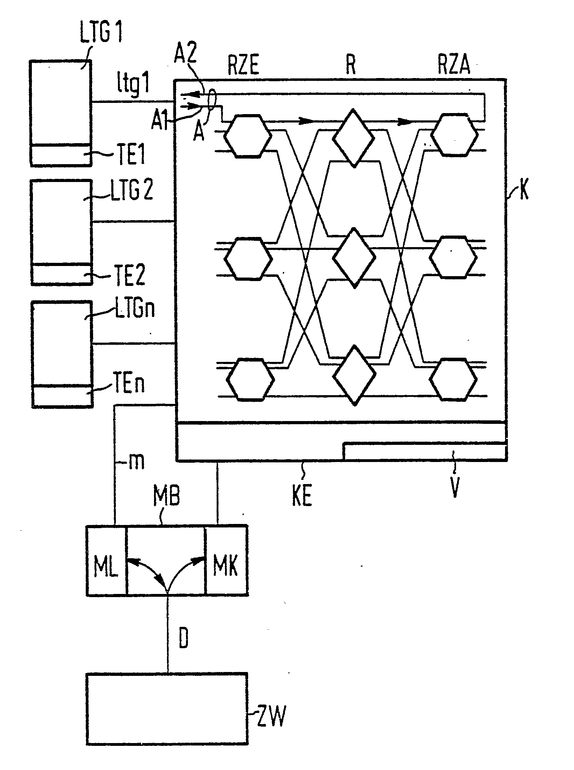

In der Zeichnung ist ein Ausführungsbeispiel der Erfindung in nur wesentlich zu ihrem Verständnis beitragenden Bestandteilen dargestellt.

Ein in drei Koppelstufen RZE, R und RZA aufgebautes Koppelfeld K weist eingangsseitig eine grössere Anzahl von Koppelfeldanschlüssen auf, von denen einer dargestellt und mit A bezeichnet ist. Ein solcher Koppelfeldanschluss umfasst immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfasst der Koppelfeldanschluss A eine Zeitmultiplexleitung A1 und eine Zeitmultiplexleitung A2. Für jede dieser beiden Zeitmultiplexleitungen ist die jeweilige Signalübertragungseinrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine grössere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z. B. A, des Koppelfeldes K sind über für jeweils beide Nachrichtenübertragungsrichtungen ausgelegte Zeitmultiplexleitungen, z. B. die Zeitmultiplexleitung ltg1, Anschlussgruppen, z. B. die Anschlussgruppe LTG (Line Trunk Group), einzeln angeschlossen. Eine solche Anschlussgruppe ist eingangsseitig beliebig mit Teilnehmerleitung (analog), Analog-Verbindungsleitungen und mit PCM-Verbindungsleitungen (alternativ sowie auch in Kombination) beschaltbar. In einer Anschlussgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652, und 1978 International Zurich Seminar on Digital Communications, Proceedings IEEE Catalogue. Nr. 78 CH 1325-0 ASST, Seiten B2.1, A4.1). Bei diesen Anschlussgruppen handelt es sich um an die Anschlüsse des mehrstufigen Koppelfeldes K einzeln angeschlossene Einrichtungen (LTG), in welchen die über das Koppelfeld nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen. Hierzu ist in Zusammenhang mit der erwähnten. Codierung und Decodierung und mit den Multiplexern und Demultiplexern eine Zwischenspeicherung der PCM-Informationen pro Verbindung vorgesehen. Für einen Anschluss von PCM-Verbindungsleitungen, die zu anderen Vermittlungsstellen führen oder von diesen herangeführt sind, können auch Ausgleichsspeicher zum Rahmenausgleich bezüglich der Informationsübertragung über diese PCM-Verbindungsleitungen in den Anschlussgruppen vorgesehen sein. In ihnen können also jeweils alle zum Anschluss der oben genannten Leitungen (in der Zeichnung links von LTG) erforderlichen zuvor aufgeführten Schaltmittel oder auch nur die jeweils funktionsbedingt erforderlichen vorgesehen sein.

Ein zentrales Steuerwerk ZW dient u. a. zur Herstellung der über das Koppelfeld K aufzubauenden Nachrichtenverbindungen. Es ermittelt die für die Herstellung einer jeden Verbindung er-forderlichen Vermittlungsdaten. Die Vermit-tlungsdaten für eine durchzuschaltende Ver-bindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u. a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zen-trale Datenleitung D verbundene Puffereinrich-tung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z. B. in der DE-PS 1 537 849 ausführlich beschrieben.

Ausser dem zentralen Steuerwerk ZW ist eine grössere Anzahl von dezentralen Steuereinrichtungen TE1 bis TEn dargestellt, die jeweils den Anschlussgruppen LTG1 bis LTGn individuell zugeordnet sind. Diese Steuereinrichtungen dienen zur Durchführung sämtlicher Schaltvorgänge innerhalb jeder der genannten Anschlussgruppen. Zu diesen Schaltvorgängen gehören insbesonde-re sämtliche Vermittlungsvorgänge innerhalb die-ser Anschlussgruppen. Weitere Einzelheiten hie-rüber können der bereits eingangs angegebenen DE-OS entnommen werden.

Die dezentralen Steuereinrichtungen TE1 bis TEn stehen mit dem zentralen Steuerwerk ZW über Datenkanäle in Verbindung, die einzeln pro dezentrale Steuereinrichtung über das Koppelfeld K bis zur Puffereinrichtung MB durchgeschaltet sind. Von dieser Puffereinrichtung, und zwar von ihrem Datenkopf ML führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse K angeschlossen. Die Puffereinrichtung ist an einem der Koppelfeldanschlüsse des Koppelfeldes K in der gleichen Weise angeschlossen, wie jede der genannten Anschlussgruppen LTG1 bis LTGn.

Die Zeitmultiplexleitung m ist also an einen Koppelfeldanschluss angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfasst. Die Zeitmultiplexleitung m ist also an einen Koppelfeldanschluss wie den mit A bezeichneten angeschaltet.

Jede Datenverbindung zwischen dem Datenkopf ML der Puffereinrichtung MB und einer jeden der Anschlussgruppen, z. B. der Anschlussgruppe LTG1, umfasst einen Kanal zur Übertragung von Daten von der Puffereinrichtung zur Übertragung von Daten von der Puffereinrichtung zur betreffenden Anschlussgruppe und einen weiteren Kanal zur Übertragung von Daten in der umgekehrten Richtung. Diese beiden Datenkanäle führen zu und von der der betreffenden An-schlussgruppe individuell zugeordneten dezen-tralen Steuereinrichtung.

Der Vollständigkeit halber sei an dieser Stelle hinzugefügt, dass die Puffereinrichtung MB auch über mehr als eine Zeitmultiplexleitung mit mehr als einem Koppelfeldanschluss des Koppelfeldes K verbunden sein kann.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nach-richtenverbindungen, z. B. Fernsprechver-bindungen. Hierzu sind in an sich bekannter Weise den Koppelvielfachen des Koppelfeldes K Haltespeicher zugeordnet, in die jeweils ein Koppelvielfach betreffenden Vermittlungsdaten eingespeichert werden. Mit Hilfe dieser Haltespeicher wird bewerkstelligt, dass in den jeweiligen Zeitlagen die erforderlichen Durchschaltungen zur Verfügung stehen bzw. die er-forderlichen Schreibvorgänge sowie Lese-vorgänge für die Vollspeicher der Zeitla-genvielfache stattfinden. Alle weiteren einzelhei-ten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u. a. ein Datenkopf MK, der der Puffereinrichtung MB zugeordnet ist. Der Vollständigkeit halber sei an dieser Stelle hinzugefügt, dass mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines grösseren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlussgruppen LTG1 bis LTGn mit Hilfe des Koppelfeldes K durchgeschaltet sein müssen, bevor der Aufbau von Nachrichtenverbindungen, z. B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, dass die Koppelfeldeinstelleinrichtung KE ausserdem in einem ihr zugeordneten Speicher V Einstelldaten, d. h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlussgruppen LTG1 bis LTGn, d. h. ihren dezentralen Steuereinrichtungen TE1 bis TEn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Tritt z. B. eine Betriebsstörung ein, aufgrund deren die über das Koppelfeld K durchgeschalteten Verbindungen sämtlich verloren gehen, d. h. also auch die Datenverbindungen zwischen der Puffereinrichtung MB und den Anschlussgruppen bzw. den ihnen individuell zugeordneten dezentralen Steuereinrichtungen, so werden nach Behebung der Betriebsstörung zunächst sämtliche Datenverbindungen wieder neu aufgebaut. Die Vermittlungsdaten für diese Datenverbindungen brauchen aber nicht vom Zentralsteuerwerk ZW neu erarbeitet zu werden und brauchen auch nicht vom Zentralsteuerwerk über den zentralen Datenkanal D und die Puffereinrichtung MB zur Koppelfeldeinstelleinrichtung KE übertragen zu werden. Vielmehr gibt das Zentralsteuerwerk ZW lediglich einen entsprechenden Befehl über die Puffereinrichtung zur Koppelfeldeinstelleinrichtung KE hin ab, aufgrund dessen diese die in ihrem Speicher V gespeicherten Vermittlungsdaten entnimmt und zum Aufbau dieser Datenverbindungen verwendet. Dies kann für jede dieser Datenverbindungen einzeln nacheinander geschehen.

Die Koppelfeldeinstelleinrichtung KE führt die Abwicklung dieser Verbindungsherstellungsvorgänge durch. Dadurch werden im Hinblick auf die Bereitstellung der Datenverbindungen zwischen zentralem Steuerwerk und dezentralen Steuereinrichtungen die hierfür erforderlichen Schaltvorgänge der Betriebsabwicklung wesentlich vereinfacht. In diesem Zusammenhang ist besonders die bereits erwähnte Entlastung des zentralen Steuerwerkes ZW hervorzuheben, welches in der Wiederanlaufphase nach Belegung einer Betriebsunterbrechung, insbesondere infolge einer Betriebsstörung, einer besonders starken Belastung unterliegt, vornehmlich durch Routineprüfungen und ähnlichen routinemässigen Schaltungsabläufen im Zusammenhang mit Einschaltemassnahmen. Hierzu sei auf die DE-OS 28 42 317 hingewiesen.

Der erläuterten Speicherung der Vermittlungsdaten der einzelnen Datenverbindungen, die zwischen dem Datenkopf ML, der Puffereinrichtung MB und den dezentralen Steuereinrichtungen TE1 bis TEn der Anschlussgruppen LTG1 bis LTGn über das Koppelfeld K und über die für beide Übertragungsrichtungen ausgelegte Zeitmultiplexleitung m durchgeschaltet werden, im Speicher V der Koppelfeldeinstelleinrichtung MB kommt eine besondere Bedeutung unter dem Gesichtspunkt zu, dass mit einer Puffereinrichtung MB mehrere Koppelfeldeinstelleinrichtungen KE in Verbindung stehen und zusammenarbeiten. Unter dieser Voraussetzung erfährt die Puffereinrichtung MB, die u. a. die Aufgabe der Verteilung der vom zentralen Steuerwerk an die mehreren Koppelfeldeinstelleinrichtungen zu übertragenden Daten hat, eine besonders effektive Entlastung.

Wie bereits erwähnt wurde, ist die Puffereinrichtung MB mit ihrem Datenkopf ML ebenso wie jede der Anschlussgruppen LTG1 bis LTGn an das Koppelfeld K angeschlossen. Die Zeitmultiplexleitung m weist hierzu eine ausreichende Anzahl von Übertragungskanälen beider Übertragungsrichtungen auf.

Jede der zwischen der Puffereinrichtung MB einerseits und jeder der dezentralen Steuereinrichtungen andererseits verlaufende Datenverbindung weist je zwei Datenkanäle auf, und zwar je einen für je eine der beiden Übertragungsrichtungen. Diese Datenverbindungen verlaufen von der Puffereinrichtung MB weiter zum Zentralsteuerwerk. Wenngleich dieser Verlauf auch über die gemeinsame zentrale Datenleitung D führt, besteht doch je eine eigene Datenverbindung zwischen dem Zentralsteuerwerk ZW einerseits und jeder der dezentralen Steuereinrichtungen ZE1 bis ZEn andererseits.

## Patentansprüche

1. Schaltungsanordnung für zentralgesteuerte Zeimultiplex-Fernmeldevermittlungsanlagen, insbesondere PCM-Fernsprechvermittlungsanlagen, mit einem mehrstufigen Koppelfeld (K) mit Zeitmultiplex-Koppelfeldeldanschlüssen (A), mit welchen einzeln eine Vielzahl von dem Anschluß jeweils von Zeitmultiplex-Verbindungsleitungen, Analog-Verbindungsleitungen und/oder Analog-Teilnehmerleitungen dienende Anschlußrichtungen (LTG1, LTG2, ... LTGn) verbunden ist, und mit wenigstens einem zentralen Steuerwerk (ZW) und mehreren, den Anschlußeinrichtungen (LTG1, LTG2, ... LTGn) individuell zugeordneten dezentralen Steuereinrichtungen (TE1, TE2, ...TEn), die mit dem Steuerwerk (ZW) über Datenkanäle in Verbindung stehen, die über das Koppelfeld (R) durchgeschaltet werden und ständig in übertragungsbereitem Betriebszustand erhalten werden, und mit einer dem Koppelfeld (R) zugeordneten, von dem ebenfalls mit wenigstens einem Koppelfeldanschluß verbundenen (über m) Steuerwerk (ZW) Koppelfeldeinstelldaten empfangenden und aufgrund derselben Nachrichtenverbindungen über Koppelfeld (R) durchschaltenden Koppelfeldeinstelleinrichtung (KE), die Koppelfeldeinstelldaten zur Durchschaltung von Datenkanälen gespeichert enthält und eine Durchschaltung solcher Datenkanäle anhand der gespeicherten Koppelfeldeinstelldaten durchdührt, dadurch gekennzeichnet, daß Koppelfeldeinstelldaten für sämtliche über das Koppelfeld (R) durchzuschaltende Datenkanäle zwischen dem zentralen Steuerwerk (ZW) und der Gesamtheit der Anschlußeinrichtungen (LTG1, LTG2, ... LTGn) in der Koppelfeldeinstelleinrichtung (KE) gespeichert sind, und daß der Befehl zur Durchschaltung dieser Datenkanäle vom zentralen Steuerwerk (ZW) über einen vom Koppelfeld (R) unabhängig bestehenden Datenweg an die Koppelfeldeinstelleinrichtung (KE) abgegeben wird.

2. Schaltungsanordnung nach Anspruch 1, dadurch gekennzeichnet, daß mehrere Koppelfeldeinstelleinrichtungen (z. B. KE) vorgesehen und mit dem Steuerwerk (ZW) über eine einer Zwischenspeicherung und/oder einer Umcodierung von Daten und/oder einer Anpassung der Übertragungsgeschwindigkeit dienende Puffereinrichtung (MB) verbunden sind, die zugleich zum Datenaustausch mit den dezentralen Steuereinrichtungen (LTG1, LTG2, ... LTGn) eingerichtet ist.

## Claims

1. A circuit arrangement for centrally controlled t. d. m. telecommunications switching systems, with a multi-stage switching network (K), with t. d. m. switching network terminals (A) which are individually connected to a plurality of peripheral devices (LTG1, LTG2, ... LTGn) which each serve to connect t. d. m. connection lines, analogue connection lines and/or analogue subscriber lines, and with at least one central control unit (ZW), and with a plurality of decentral control devices (TE1, TE2, ... TEn) which are individually assigned to the peripheral devices (LTG1, LTG2 ... LTGn) and which are connected to the control unit (ZW) via data channels which are switched through via the switching network (R) and are constantly maintained in readiness for transmission, and are constantly maintained in readiness for transmission, and with a switching network setting-up device (KE) assigned to the switching network (R), for receiving items of switching network setting-up data from the control unit (ZW) likewise connected (via m) to at least one switching network terminal, and, on the basis of said setting-up data, for switching through communications connections via the switching network (R), and which stores items of switching network setting-up data for the switch-through of data channels and switches through said data channels on the basis of the stored items of switching network setting-up data; characterised in that items of switching network setting-up data for all the data channels which are to be switched through via the switching network (R) between the central control unit (ZW) and all the peripheral devices (LTG1, LTG2, ... LTGn) are stored in the switching network setting-up device (KE), and that the command to switch through these data channels is emitted from the central control unit (ZW) to the switching network setting-up device (KE) via a data path which exists independently of the switching network (R)

2. A circuit arrangement as claimed in claim 1, characterised in that a plurality of switching network setting-up devices (e. g. KE) are provided and are connected to the control unit (ZW) via a buffer device (MB) which serves to store intermediately and/or to recode data and/or to match the transmission speed and which is simultaneously set up to exchange data with the decentral control devices (LTG1, LTG2, ... LTGn).

## Revendications

1. Montage pour centraux de télécommunications à commande centrale et à multiplexage par répartition dans le temps, en particulier pour centraux téléphoniques multiplex dans le temps à impulsions codées, avec un champ de couplage (K) à plusieurs étages et à bornes de branchement (A), à multiplexage par répartition dans le temps, auxquelles sont reliées individuellement un grand nombre de dispositifs de branchement (LTG1, LTG2 ... LTGn) servant respectivement au branchement de lignes de jonctions de multiplexage par répartition dans le temps, des lignes de jonctions analogiques et/ou de lignes d'abonnés analogiques, et avec au moins une unité de centrale de commande (ZW) et plusieurs unités de commandes décentralisées (TE1, TE2, ...TEn) associées individuellement aux dispositifs de branchement (LTG1, LTG2, ... LTGn) et qui sont en liaison avec l'unité de commande (ZW) par l'intermédiaire de canaux de données qui sont branchés par l'intermédiaire du champ de couplage (R) et sont maintenues en permanence en état de fonctionnement pour la transmission, et, en outre, avec un dispositif de réglage du champ de couplage (KE), associé au champ de couplage (R), recevant de l'unité de commande (ZW) qui est également reliée (par m) à au moins une borne du champ de couplage, des données de réglage du champ de couplage et établissant, sur la base de celles-ci, des liaisons, ledit dispositif de réglage du champ de couplage contenant les données de réglage du champ de couplage pour la mise en circuit de canaux de données et réalisant une mise en circuit de tels canaux de données à l'aide des données de réglage du champ de couplage qui ont été mémorisées, caractérisé par le fait que les données de réglage du champ de couplage pour tous les canaux de données à mettre en circuit par l'intermédiaire du champ de couplage (R) sont mémorisées, entre l'unité centrale de commande (ZW) et la totalité des dispositifs de branchements (LGT1, LGT2, ... LGTn), dans l'unité du réglage (KE) du champ de couplage, et que l'instruction pour la mise en circuit de ces canaux de données est émise par l'unité centrale de commande (ZW), par l'intermédiaire d'une voie de données indépendante du champ de couplage, au dispositif de réglage (KE) du champ de couplage.

2. Montage selon la revendication 1, caractérisé par le fait qu'il comporte plusieurs dispositifs de réglage du champ de couplage, (par exemple Ke), qui sont reliées à l'unité de commande (ZW) par l'intermédiaire d'un dispositif tampon (MB) servant à la mémorisation intermédiaire et/ou à un changement de code de données et/ou à l'adaptation de la vitesse de transmission, ledit dispositif tampon étant également agencé pour l'échange de données avec les dispositifs de commande décentralisés (LGT1, LGT2, ... LGTn).